# EUROPÄISCHE PATENTSCHRIFT

(11) **EP 1 172 243 B1**
(45) Veröffentlichungstag und Bekanntmachung des Hinweises auf die Patenterteilung: **14.11.2007**
(21) Anmeldenummer: 01116555.2
(22) Anmeldetag: 09.07.2001
(51) Int. Cl.: B60J 7/043

(54) **Fahrzeugdach mit wenigstens einem oberhalb des festen Fahrzeugsdachs verschiebbaren Deckel**
Vehicle roof provided with at least a panel sliding above the rigid part of the roof
Toit de véhicule équipé au moins d'un panneau coulissant au dessus de la partie fixe du toit

(30) Priorität: 12.07.2000 DE 10033887
(43) Veröffentlichungstag der Anmeldung: 16.01.2002
(73) Patentinhaber: Webasto AG, 82131 Stockdorf (DE)
(72) Erfinder: Radmanic, Stjepan, 82291 Mammendorf (DE); Kohout, Erwin, 81375 München (DE)
(74) Vertreter: Konnerth, Dieter Hans

(56) Entgegenhaltungen:
- EP-A- 0 296 644
- US-A- 5 275 461
- PATENT ABSTRACTS OF JAPAN vol. 010, no. 365 (M-542), 6. Dezember 1986 (1986-12-06) & JP 61 160319 A (OI SEISAKUSHO CO LTD), 21. Juli 1986 (1986-07-21)

## Beschreibung

Die Erfindung betrifft ein Fahrzeugdach mit den Merkmalen des Oberbegriffs des Anspruchs 1.

Die US-A-5,275,461 offenbart ein derartiges gattungsgemäßes Fahrzeugdach.

Aus der DE 42 38 945 C1 ist ein Fahrzeugdach mit wenigstens einem Deckel bekannt, der zum Öffnen mittels eines Ausstellhebels an seiner Hinterkante anhebbar und anschließend oberhalb des festen Fahrzeugdachs verschiebbar ist. Die Verschiebebewegung erfolgt mittels eines ersten Antriebskabels und die Ausstellbewegung erfolgt mittels eines gegenläufig zu diesem bewegbaren zweiten Antriebskabels. Ein die Ausstellbewegung steuernder Ausstellhebel steht über einen hinteren Schlitten in ständigem Eingriff mit dem einen Antriebskabel, während ein nahe der Vorderkante angeordneter Schlitten, der für die Verschiebebewegung des Deckels zuständig ist, in ständigem Eingriff mit dem gegenläufig hierzu bewegbaren anderen Antriebskabel steht. Durch diese ständige Kopplung ist eine vollständige Trennung der Ausstellbewegung von der Verschiebebewegung nur bedingt möglich und für die Ausstellbewegung steht nur ein sehr kurzer Verfahrweg des Antriebskabels zur Verfügung.

Die Nachteile des vorstehend erläuterten bekannten Fahrzeugdachs werden durch ein Fahrzeugdach der eingangs genannten Art überwunden, das in der DE 197 13 348 C1 offenbart ist. Insbesondere gewährleistet dieses Fahrzeugdach eine klar definierte Position des Deckels während der Ausstellbewegung durch Verriegelung eines die Verstellbewegung des Deckels bewegenden Steuer schlittens während der Ausstellbewegung über einen Riegelstein mit einer dachfesten Führungsschiene. Durch die Entkopplung von der Führungsschiene und gleichzeitige Kopplung mit einem Steuerschlitten wird ein eindeutiger Beginn der Verschiebebewegung definiert, da das erste Antriebskabel nach Beendigung eines Leerweges bei vollendeter Ausstellbewegung den Riegelstein auf seine Verriegelungsposition mit der Führungsschiene in eine Kopplungsposition des Antriebskabels mit dem Steuerschlitten bewegt.

Aus der DE 42 38 946 C1 ist ein Fahrzeug mit wenigstens einem Deckel bekannt, der zum Öffnen mittels eines Ausstellhebels an seiner Hinterkante anhebbar ist, wobei wenigstens ein am Deckel angeordnetes Führungselement mit einer dachfesten Führung im Eingriff steht. Bei diesem Dach wird der Deckel mittels einer Ausstellmechanik angehoben und dabei ein deckelfest angeordneter Führungszapfen an eine oberhalb des festen Daches angeordnete, relingartige Dachführung übergeben. Bei diesem bekannten Dach ragt bei geschlossenem Deckel die dachfeste Führung über die feste Dachhaut vor, so daß insgesamt kein glattflächiges Erscheinungsbild gewährleistet ist. Ferner bleiben bei geöffnetem Deckel die aus in Fahrtrichtung offenen Kulissen nach vorne austretenden Ausstellhebel in aufgerichtetem Zustand stehen, was sich ebenfalls nachteilig auf die Optik des Fahrzeugdachs auswirkt. Ferner besteht die Gefahr, daß sich der Ausstellhebel durch Rüttelbewegungen in seiner aufgestellten Position derart verändert, daß beim Schließen des Deckels der nach vorn fahrende Deckel mit der nach vorn geöffneten Deckelkulisse den entsprechenden Bolzen am Ausstellhebel unter Umständen verfehlen kann.

Diese Nachteile werden durch die Konstruktion des Fahrzeugdachs der eingangs genannten Art überwunden, das aus der DE 197 13 347 C1 bekannt ist, und bei dem das Führungselement von einem vorn Ausstellhebel unabhängigen Stützhebel gebildet ist, der mit einem Ende im hinteren Bereich des Deckels angelenkt ist, und dessen anderes Ende sich mit wenigstens einem Gleitelement in der unterhalb des festen Fahrzeugdachs angeordneten dachfesten Führung abstützt.

Die aus den vorstehend genannten Druckschriften DE 197 13 347 C1 und DE 197 13 348 C1 bekannten Fahrzeugdächer haben jedoch den Nachteil, daß die Verschiebebewegung relativ aufwendig mittels eines ersten Antriebskabels erfolgt, während zur Ausstellbewegung ein zweites Antriebskabel erforderlich ist. Außerdem müssen die die Verschiebebewegung und die Ausstellbewegung bewirkenden Teile über zusätzliche Riegelsteine an das jeweilige Antriebskabel gekoppelt bzw. mit der dachfesten Führungsschiene verriegelt werden.

Der Erfindung liegt die Aufgabe zugrunde, ein Fahrzeugdach der eingangs genannten Art zu schaffen, dessen Verstell- und Hubmechanik hinsichtlich der Funktion und dem Aufbau vereinfacht und verbessert ist.

Diese Aufgabe durch ein Fahrzeugdach mit den Merkmalen des Anspruchs 1 gelöst.

Vorteilhafte Weiterbildungen der Erfindung sind in den Unteransprüchen angegeben.

Dadurch, daß erfindungsgemäß der Hubmechanismus für die Vorderkante des Deckels vollständig in den vorderen Steuerschlitten integriert ist und die vorderen und hinteren Steuerschlitten auf jeder Deckelseite von einem einzigen Antriebskabel angetrieben sind, an welchem sie voneinander beabstandet fest angebracht sind, genügt ein einziges Antriebskabel pro Deckelseite, um die Ausstellbewegung und die Verschiebebewegung des Deckels auszuführen.

Die erfindungsgemäße Hub- und Verschiebemechanik stellt eine einfache, robuste und mit relativ geringer Teileanzahl realisierbare und damit kostengünstige Deckelmechanik dar, die zuverlässig arbeitet.

Zweckmäßigerweise können die Kulissenbahnen in fest mit den Führungsschienen verbundenen Kulissen gebildet sein und die oberen Enden der Kulissenbahnen können in Vorderenden von Längsführungsbahnen der Führungsschienen münden.

Gemäß einer vorteilhaften Ausgestaltung ist vorgesehen, daß der vordere Hubmechanismus ein Gleitelement wie z. B. einen Gleitzapfen aufweist, das bzw. der in einer Kulissenbahn einer am vorderen Steuerschlitten angeordneten Hubkulisse geführt ist, wobei die Kulissenbahn gegenläufig zu der dachfesten Kulissenbahn der Kulisse verläuft und in Richtung auf die Deckelvorderkante ansteigt.

Bei einer Weiterbildung der Erfindung mit beiderseits der Deckelhinterkante am Deckel angelenkten und durch Kulissen geführten Stützhebeln ist vorteilhafterweise vorgesehen, daß am hinteren Steuerschlitten ein Ausstellhebel schwenkbar angelenkt ist, der durch eine dachfeste Hubkulisse bei einer Rückwärtsbewegung des hinteren Steuerschlittens zum Anheben der hinteren Deckelkante angehoben und daraufhin außer Wirkeingriff mit dem Deckel gebracht wird und dabei die Abstützung der Deckelhinterkante an den Stützhebel übergibt. Bevorzugt ist bei dieser Variante vorgesehen, daß der Stützhebel mit einem Ende an dem Deckel angelenkt ist, mittels eines Führungszapfens, der z. B. auch eine drehbar gelagerte Gleitbacke sein kann, dauerhaft in einer Führungszapfenbahn der Führungsschiene geführt ist und am anderen Ende einen weiteren Stützzapfen, der auch als aufsteckbare Gleitbacke gebildet sein kann, aufweist, der beim Aufstellen des Stützhebels in diese Führungszapfenbahn eintritt. Die Führungszapfenbahn kann in einer zweiten, äußeren Führungsschiene gebildet sein, die von der ersten, inneren Führungsschiene nach außen versetzt angeordnet ist.

Nachfolgend wird die Erfindung anhand der Zeichnungen beispielhaft näher erläutert. Es zeigt:
- Fig. 1: eine schematische perspektivische Ansicht eines Fahrzeugdachs mit geschlossenem Deckel,
- Fig. 2: eine Darstellung gemäß Fig. 1 bei vollständig geöffnetem Deckel,
- Fig. 3: einen Längsschnitt durch einen Seitenrand des Fahrzeugdachs im Bereich der Ausstellmechanik bei geschlossenem Deckel,
- Fig. 4: einen Längsschnitt gemäß Fig. 3 durch eine vordere Ausstellmechanik in vergrößerter Darstellung,
- Fig. 5: einen Längsschnitt gemäß Fig. 3 durch eine hintere Ausstellmechanik in vergrößerter Darstellung,
- Fig. 6: einen Längsschnitt durch einen Seitenrand des Fahrzeugdachs im Bereich der Ausstellmechanik bei ausgestelltem Deckel,
- Fig. 7: einen Längsschnitt durch einen Seitenrand des Fahrzeugdachs im Bereich der Ausstellmechanik am Ende einer Übergangsbewegung,
- Fig. 8: einen Längsschnitt durch einen Seitenrand des Fahrzeugdachs im Bereich der Ausstellmechanik in einer Zwischenstellung, und
- Fig. 9: einen Längsschnitt durch einen Seitenrand des Fahrzeugdachs im Bereich der Ausstellmechanik bei geöffnetem Deckel.

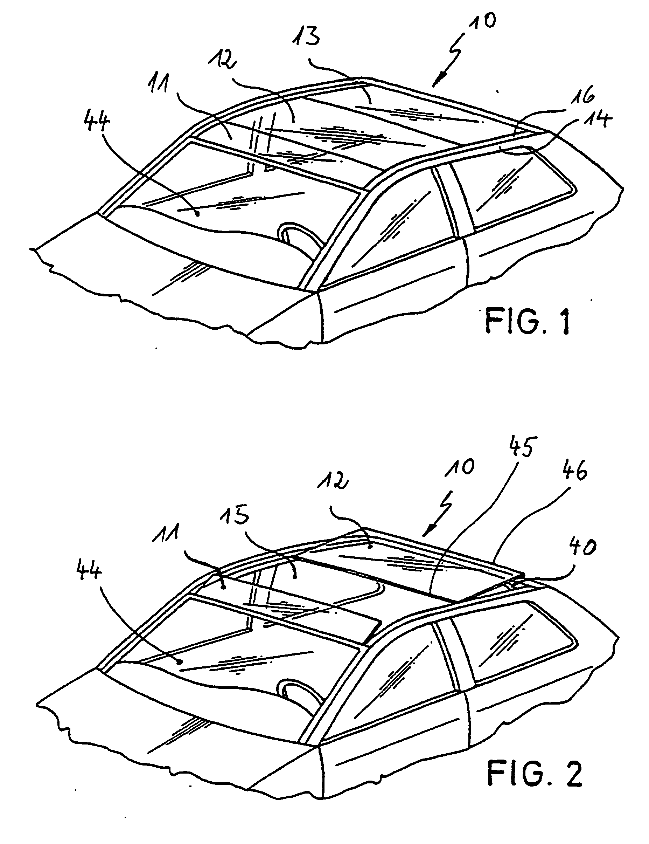

Ein Fahrzeugdach 10 (siehe Fig. 1) umfaßt eine oberhalb einer Windschutzscheibe 44 schwenkbar angeordnete Windabweiserlamelle 11, einen hinter dieser Windabweiserlamelle 11 liegenden verschiebbaren Deckel 12 und eine sich an den geschlossenen Deckel 12 anschließende feste Dachscheibe 13. Seitlich werden die Windabweiserlamelle 11, der Deckel 12 und die Dachscheibe 13 jeweils von einem Seitenholm 14 begrenzt.

Im geschlossenen Zustand gemäß Fig. 1 bietet das Fahrzeugdach 10 ein vollkommen glattflächiges Erscheinungsbild. Obwohl der Deckel 12 zur Freigabe einer Dachöffnung 15 nach hinten über das feste Fahrzeugdach 10 verschiebbar ist (siehe Fig. 2), sind hierzu keinerlei oberhalb des festen Fahrzeugdachs 10 angeordnete Führungen erforderlich. Im ausgestellten und nach hinten verfahrenen Zustand wird der Deckel 12 vielmehr mittels seitlich im Bereich der Deckelhinterkante 46 angelenkter Stützhebel 40 abgestützt, welche in unterhalb des Niveaus der festen Dachhaut angeordneten Führungen verfahrbar sind und welche beim Austreten nach oben ein flexibles Dichtelement 16 teilweise verdrängen, welches zwischen den Seitenholmen 14 und den Bauteilen 11, 12 und 13 angeordnet ist.

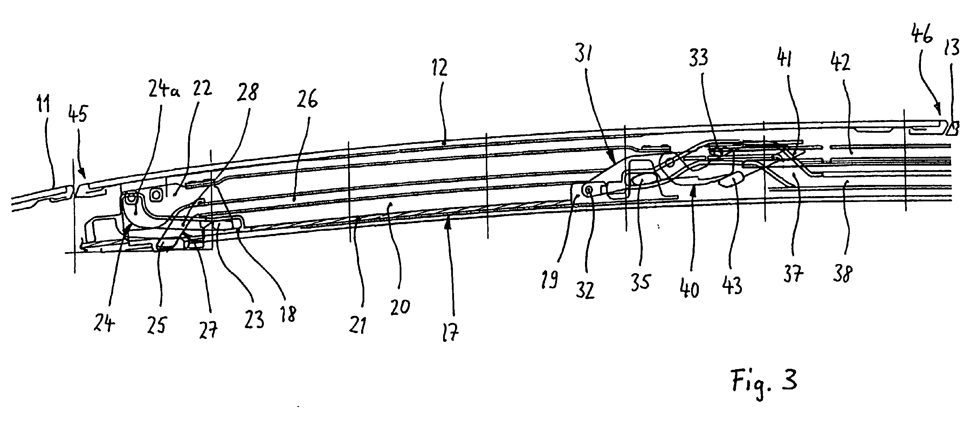

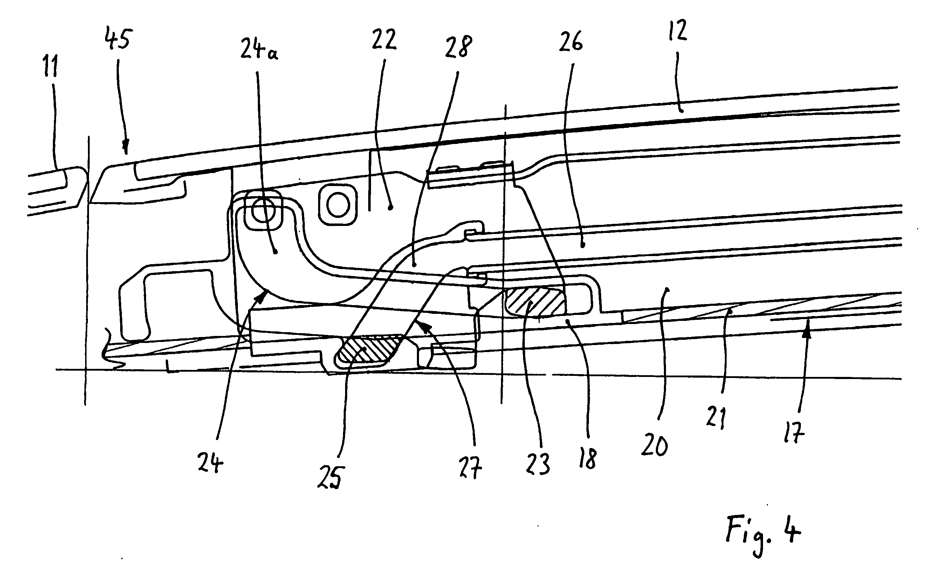

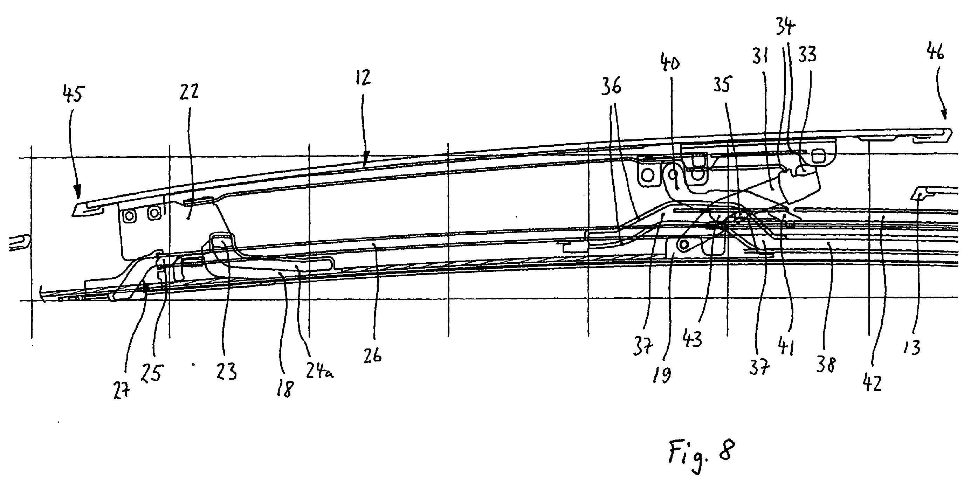

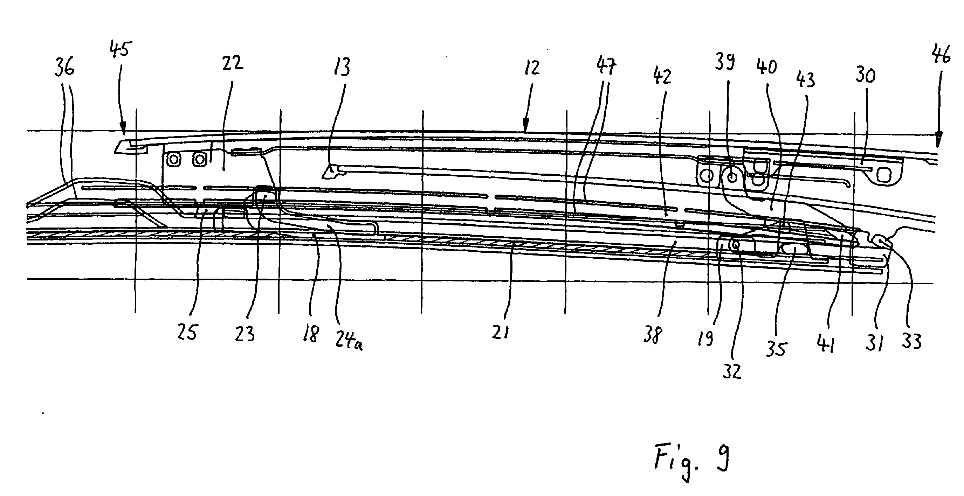

Die für das Ausstellen und Verschieben des Deckels 12 erforderliche Mechanik ist an der linken und rechten Seite des Deckels 12 gleichartig aufgebaut, so daß lediglich die Mechanik der einen Seite beschrieben und nachfolgend anhand der Fig. 3 bis 9 erläutert wird.

Die Ausstell- und Verschiebemechanik für den Deckel 12 umfasst eine Führungsschiene 17, die als Profilteil mit in Längsrichtung verlaufenden Führungsbahnen gebildet ist. In einer unteren Führungsbahn 20 sind ein vorderer Steuerschlitten 18 und ein hinterer Steuerschlitten 19 längsverschiebbar geführt. Die beiden Steuerschlitten 18 und 19 sind unter gegenseitigem Abstand mit einem Antriebskabel 21 fest verbunden. Die Steuerschlitten 18 und 19 sind außerdem mit einem Vorderrand 45 bzw. der Vorderkante und einem Hinterrand 46 bzw. der Hinterkante des Deckels 12 verbunden, und zwar jeweils über eine Kulissenführung bzw. Stützhebel zum Anheben und Tragen der Vorderkante 45 bzw. der Hinterkante 46 des Deckels 12 bei dessen Verstellung zwischen seiner Schließ- und seiner Öffnungsposition, wie im folgenden zunächst für die Deckelvorderkante 45 und dann für die Deckelhinterkante 46 im einzelnen erläutert wird.

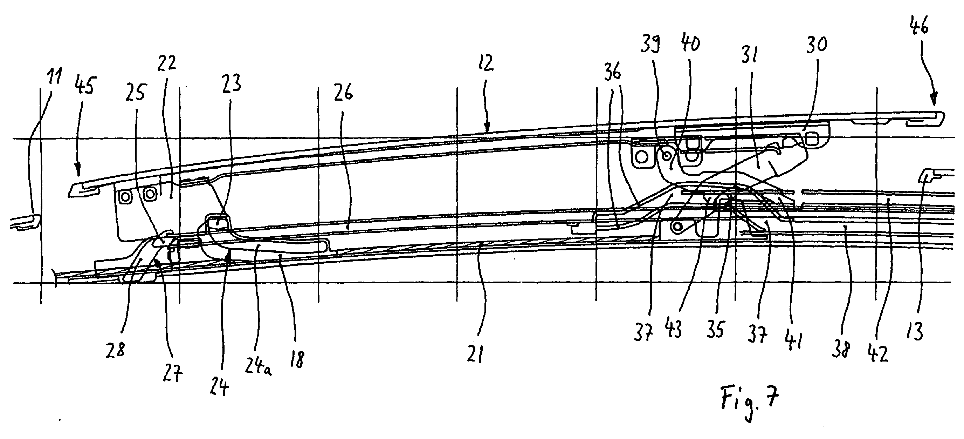

An der Unterseite des Deckels 12 ist im Bereich seiner Vorderkante 45 ein seitlicher vertikaler Deckelträger 22 angeordnet. Am unteren Rand des Deckelträgers 22 ist ein seitlich hervorstehender Gleitzapfen 23 mit Abstand von der Vorderkante 45 des Deckels 12 fest angebracht. Der Gleitzapfen 23 greift in eine Kulissenbahn 24a einer Hubkulisse 24 ein, die am vorderen Steuerschlitten 18 fest angebracht bzw. einstückig mit diesem gebildet ist. Die Kulissenbahn 24a der Hubkulisse 24 weist einen von ihrem hinteren Ende zu ihrem vorderen Ende im Bereich der Vorderkante 45 des Deckels 12 ansteigenden Verlauf auf. Insbesondere ist die Kulissenbahn 24a in etwa L-förmig mit einem vorderen kurzen gebogenen Schenkelabschnitt und einem hinteren langen gebogenen Schenkelabschnitt gebildet. Der Gleitzapfen 23 befindet sich bei geschlossenem Deckel 12 im Bereich des hinteren Endes der Kulissenbahn 24a (Fig. 3) und bei vorne angehobenem Deckel 12 sowie während der Verschiebung des Deckels 12 am vorderen erhöhten Ende der Kulissenbahn 24a (siehe z. B. Fig. 7). Der Gleitzapfen 23 bewegt sich in der Kulissenbahn 24a aufgrund einer durch das Antriebskabel 21 bewirkten Längsverschiebung des Steuerschlittens 18, wobei der Gleitzapfen 23 aus seiner in Fig. 3 gezeigten unteren Position bei geschlossenem Deckel 12 durch eine rückwärts gerichtete Verschiebung des vorderen Steuerschlittens 18 in seine obere Position gelangt, in welcher die Vorderkante 45 des Deckels 12 angehoben ist (siehe Fig. 7).

Von dem Deckelträger 22 steht seitlich ein Schiebezapfen 25 hervor, der ebenfalls am unteren Rand des Deckelträgers 22 angebracht ist und bei der dargestellten Ausführungsform in Fahrzeuglängsrichtung vor dem Gleitzapfen 23 liegt. Die Führungsschiene 17 umfaßt des weiteren eine Führungsbahn 26 für den Schiebezapfen 25, die parallel zur Schlittenführungsbahn 20 in Längsrichtung der Führungsschiene 17 verläuft. An das Vorderende der Schiebezapfen-Führungsbahn 26 schließt sich eine Kulisse 27 zur Führung der Deckelvorderkante 45 bei deren Ausstell- und Absenkbewegung an. Diese Kulisse 27 ist fest mit der Führungsschiene 17 bzw. dem Fahrzeugdach 10 verbunden und besitzt eine Kulissenbahn 28, die sich an das Vorderende der Schiebezapfen-Führungsbahn 26 der Führungsschiene 17 anschließt und nach vorne abwärts verläuft. Bei geschlossenem Deckel 12 befindet sich der Schiebezapfen 25 (siehe Fig. 3) am unteren Ende der Kulissenbahn 28. Der Schiebezapfen 25 ist in der Fahrzeuglängsrichtung (x-Richtung) weitgehend spielfrei geführt und bestimmt damit die exakte Position der Deckelvorderkante 45 in der Schließstellung des Deckels 12.

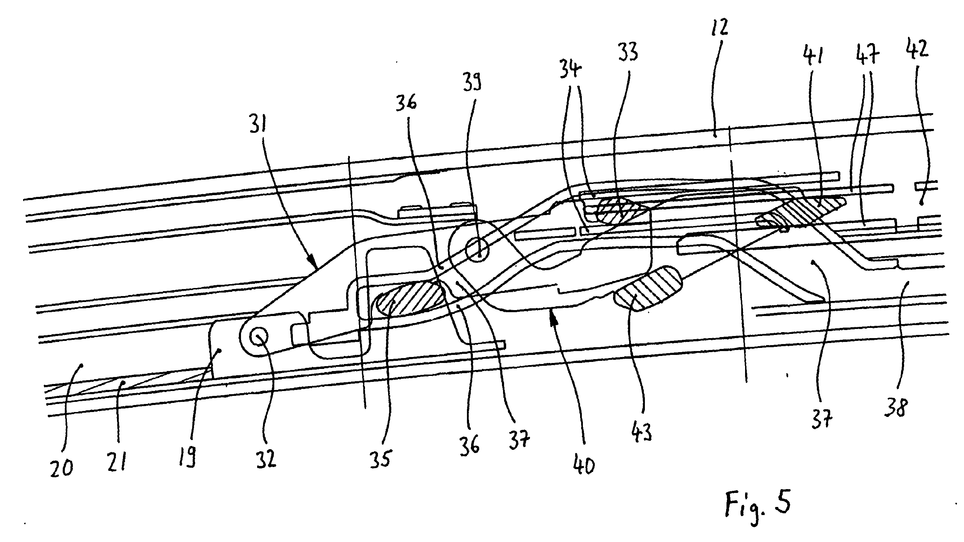

Die exakte Position der Deckelvorderkante 45 in vertikaler Richtung (z-Richtung) wird durch den Gleitzapfen 23 bestimmt, der in dem Hinterabschnitt der Kulissenbahn 24a in vertikaler Richtung im wesentlichen spielfrei aufgenommen ist. Wenn die Deckelvorderkante 45 mittels der Hubkulisse 24 und dem Gleitzapfen 23 durch Nachhintenverfahren des vorderen Steuerschlittens 18 angehoben wird, bewegt sich gleichzeitig der Schiebezapfen 25 entlang der nach hinten ansteigenden Kulissenbahn 28 nach oben und tritt schließlich in das Vorderende der Schiebezapfen-Führungsbahn 26 der Führungsschiene 17 ein, (siehe Fig. 5). Nun hat der Deckel 12 im Bereich seiner Vorderkante 45 eine Stellung eingenommen, aus der er nach hinten verschoben werden kann.

Nachfolgend wird der Hub- und Verschiebemechanismus im Bereich der Hinterkante 46 des Deckels 12 anhand einer Längsverschiebung des hinteren Führungsschlittens 19 über das Antriebskabel 21 erläutert.

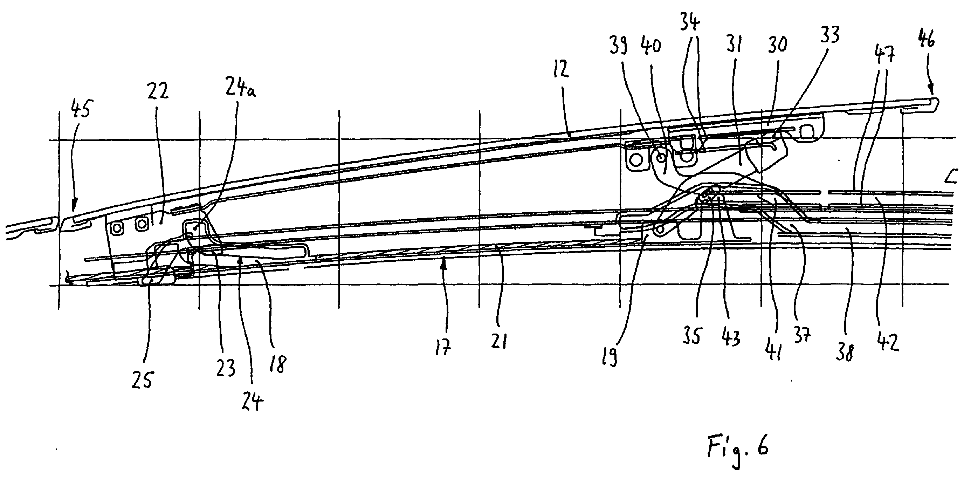

Der Deckel 12 weist im Bereich seiner Hinterkante 46 einen sich abwärts erstrekkenden Deckelträger 30 auf (siehe Fig. 6). Zum Anheben des Hinterrandes bzw. der Hinterkante 46 des Deckels 12 dient ein Ausstellhebel 31, der an seinem Vorderende mittels eines Lagerstifts 32 schwenkbar am hinteren Steuerschlitten 19 angelenkt ist und der an seinem Hinterende einen seitlich hervorstehenden Ausstellzapfen 33 aufweist. Der Ausstellzapfen 33 greift bei geschlossenem Dekkel (Fig. 3) bis zu einer angehobenen Deckelposition bzw. Übergabestellung (Fig. 5) in eine Ausstellführung 34 an dem Deckelträger 30 ein, welche nach hinten offen ist (siehe beispielsweise Fig. 5). Zwischen dem Lagerstift 32 und dem Ausstellzapfen 33 steht seitlich von dem Ausstellhebel 31 ein Hubzapfen 35 vor, der in einer führungsschienenfesten Hubkulisse 36 gleitend geführt ist. Eine Kulissenbahn 37 der Hubkulisse 36 verläuft von vorn nach hinten zunächst ansteigend, daraufhin im wesentlichen parallel zur Längsrichtung der Führungsschiene 17 und daraufhin abfallend und in eine Führungsbahn 38 der Führungsschiene 17 mündend, die mit der Schlittenführungsbahn 20 zusammenfallen kann.

Mittels eines Lagerstifts 39 ist ein Stützhebel 40 für die Deckelhinterkante 46 an dem Deckelträger 30 angelenkt. Am dem Lagerstift 39 gegenüberliegenden Ende des Stützhebels 40 steht von diesem seitlich ein Führungszapfen 41 vor, der in sämtlichen Positionen der Hinterkante 46 des Deckels 12 in einer Führungszapfenbahn 42 einer bezüglich der erstgenannten inneren Führungsschiene 17 äußeren Führungsschiene 47 geführt ist. Die Führungszapfenbahn 42 verläuft in Längsrichtung der Führungsschiene 47. Statt der inneren Führungsschiene 17 und der äußeren Führungsschiene 47 kann auch nur eine Führungsschiene vorgesehen sein, die die genannten Führungsbahnen enthält.

In etwa in der Mitte zwischen dem Lagerstift 39 und dem Führungszapfen 41 steht seitlich von dem Stützhebel 40 ein Stützzapfen 43 hervor, der erst nach vollständigem Anheben der Hinterkante 46 des Deckels 12 in die Führungszapfenbahn 42 eintritt und bei weiterem Verschieben des Deckels 12 nach hinten in dieser Führungszapfenbahn 42 gleitet, um den rückseitig hochgeschwenkten Deckel 12 gemeinsam mit dem in der Führungszapfenbahn 42 geführten Führungszapfen 41 anstelle des Ausstellhebels 31 abzustützen.

Anhand der Figuren 5 bis 9 wird nachfolgend das Anheben der Hinterkante 46 des Deckels 12 bis in die Deckelöffnungsstellung gemäß Fig. 7 erläutert.

Wenn der hintere Steuerschlitten 19 ausgehend von der Deckelschließposition (siehe Fig. 5) mittels des Antriebskabels 21 nach hinten bewegt wird, bewegt sich der Hubzapfen 35 des Ausstellhebels 31 zunächst in dem vorderen ansteigenden Abschnitt der Kulissenbahn 37 der Hubkulisse 36 aufwärts (Fig. 6), so daß der aufwärts geschwenkte Ausstellhebel 31 mittels des Ausstellzapfens 33, der in der Ausstellführung 34 geführt ist, die Hinterkante 46 des Deckels 12 über das feste Dach ausstellt. In der in Fig. 6 gezeigten Position tritt der bislang nicht eingerückte Stützzapfen 43 in die Führungszapfenbahn 42 ein und gleitet nun bei weiterer Rückwärtsbewegung des hinteren Steuerschlittens 19 gemeinsam mit dem vor ihm gleitenden Führungszapfen 41 entlang der Führungszapfenbahn 42 unter Abstützung des Deckels 12 unter einem vorgegebenen Ausstellwinkel nach hinten. Bei der Bewegung des hinteren Steuerschlittens 19 von der in Fig. 3 bzw. 5 gezeigten Position in die in Fig. 6 gezeigte Position, in welcher die Hinterkante 46 des Deckels 12 ausgestellt ist, bewegt sich der Ausstellzapfen 33 vorn vorderen Ende der Ausstellführung 34 zu deren hinteren offenen Ende, aus welchem der Ausstellzapfen 33 bei einer weiteren Rückwärtsbewegung des hinteren Steuerschlittens 19 austritt (siehe Fig. 7, die die Übergabestellung wiedergibt). Während des Übergangs von der in Fig. 6 gezeigten Position zu der in Fig. 7 gezeigten Position bewegt sich der Hubzapfen 35 entlang des waagrechten Teils der Kulissenbahn 37 der Hubkulisse 36 und gelangt daraufhin in den abfallenden Teil der Kulissenbahn 37, so daß der Ausstellhebel 31 wieder nach unten in etwa in eine horizontale Stellung geschwenkt wird.

Bei einer weiteren Rückwärtsbewegung des hinteren Steuerschlittens 19 tritt der Hubzapfen 35 in die Führungsbahn 38 ein, die den Ausstellhebel 31 während einer weiteren Rückwärtsbewegung des Steuerschlittens 19 in seiner abgesenkten horizontalen Stellung führt, in der er funktionslos ist. Die angehobene Position der Hinterkante 46 des Deckels 12 wird nun ausschließlich durch den Stützhebel 40 aufrechterhalten, dessen beide Zapfen 41 und 43 in der Führungszapfenbahn 42 geführt sind.

Die Schließbewegung des Deckels 12 erfolgt bei einem gemeinsamen gekoppelten Vorwärtslauf der beiden Steuerschlitten 18 und 19 mit umgekehrter Abfolge der Schwenkbewegungen der Hinterkante 46 und der Vorderkante 45 des Dekkels 12.

### Bezugszeichenliste

- 10: Fahrzeugdach
- 11: Windabweiserlamelle
- 12: Deckel
- 13: Dachscheibe
- 14: Seitenholm
- 15: Dachöffnung
- 16: Dichtelement
- 17: Führungsschiene
- 18: vorderer Steuerschlitten
- 19: hinterer Steuerschlitten
- 20: Schlittenführungsbahn
- 21: Antriebskabel
- 22: Deckelträger
- 23: Hubzapfen
- 24: Hubkulisse
- 24a: Kulissenbahn
- 25: Schiebezapfen
- 26: Verschiebezapfenführungsbahn
- 27: Kulisse
- 28: Kulissenbahn
- 29:
- 30: Wange
- 31: Ausstellhebel
- 32: Lagerstift
- 33: Ausstellzapfen
- 34: Ausstellführung
- 35: Hubzapfen
- 36: Hubkulisse
- 37: Kulissenbahn
- 38: Führungsbahn
- 39: Lagerstift
- 40: Stützhebel
- 41: Führungszapfen
- 42: Führungszapfenbahn
- 43: Stützzapfen
- 44: Windschutzscheibe
- 45: Vorderrand
- 46: Hinterrand
- 47: äußere Führungsschiene

## Patentansprüche

1. Fahrzeugdach mit wenigstens einem an seiner Hinterkante anhebbaren und oberhalb des festen Fahrzeugdachs (13) verschiebbaren Deckel (12) und mit einer Steuermechanik für den Deckel (12), die einen vorderen Hubmechanismus und einen vorderen Verschiebemechanismus für die Vorderkante (45) des Deckels (12) und einen hinteren Hubmechanismus und einen hinteren Verschiebemechanismus für die Hinterkante (46) des Deckels (12) aufweist, wobei die Verschiebemechanismen mit dem Deckel (12) verbundene Steuerschlitten (18, 19) umfassen, die in seitlichen Führungsschienen (17) verschiebbar geführt und antreibbar sind,
wobei der Hubmechanismus für die Vorderkante (45) des Deckels (12) in den vorderen Steuerschlitten (18) integriert ist und der vordere und der hintere Steuerschlitten (18 bzw. 19) auf jeder Deckelseite voneinander beabstandet mit einem Antriebskabel (21) fest verbunden und von diesem antreibbar sind, und
wobei deckelfeste Schiebezapfen (25) beiderseits der Deckelvorderkante (45) zum Führen der Deckelvorderkante (45) bei der Deckelverschiebung in dachfesten Führungsbahnen (26) der Führungsschienen (17) und nach vorne abfallend verlaufende Kulissenbahnen (28) zur Führung der Deckelvorderkante (45) bei ihrer Ausstell- und Absenkbewegung vorgesehen sind,
**dadurch gekennzeichnet,**
**dass** jeder Schiebezapfen (25) mit Gleitflächen zum flächigen Abstützen in der Führungsbahn (26) und der Kulissenbahn (28) gebildet ist.

2. Fahrzeugdach nach Anspruch 1,
**dadurch gekennzeichnet, dass** die Kulissenbahnen (28) in fest mit den Führungsschienen (17) verbundenen Kulissen (27) gebildet sind und dass
die oberen Enden der Kulissenbahnen (28) in Vorderenden von Längsführungsbahnen (26) der Führungsschienen (17) münden.

3. Fahrzeugdach nach Anspruch 2,
**dadurch gekennzeichnet, dass** der vordere Hubmechanismus einen Gleitzapfen (23) aufweist, der in einer Kulissenbahn (24a) einer am vorderen Steuerschlitten (18) angeordneten Hubkulisse (24) geführt ist, wobei die Kulissenbahn (24a) gegenläufig zu der dachfesten Kulissenbahn (28) der Kulisse (27) verläuft und in Richtung auf die Deckelvorderkante (45) ansteigt.

4. Fahrzeugdach nach einem der Ansprüche 1 bis 3, mit beiderseits der Deckelhinterkante (46) am Deckel (12) angelenkten und durch Kulissen geführten Stützhebeln (40),
**dadurch gekennzeichnet, dass** am hinteren Steuerschlitten (19) ein Ausstellhebel (31) schwenkbar angelenkt ist, der durch eine dachfeste Hubkulisse (36) bei einer Rückwärtsbewegung des hinteren Steuerschlittens (19) zum Anheben der hinteren Deckelkante (46) angehoben und daraufhin außer Wirkeingriff mit dem Deckel (12) gebracht wird und dabei die Abstützung der Deckelhinterkante (46) an den Stützhebel (40) übergibt.

5. Fahrzeugdach nach Anspruch 4,
**dadurch gekennzeichnet, dass** der Stützhebel (40) mit einem Ende an dem Deckel (12) angelenkt ist, mittels eines Führungszapfens (41) dauerhaft in einer Führungszapfenbahn (42) der Führungsschiene (17) geführt ist und am anderen Ende einen weiteren Stützzapfen (43) aufweist, der beim Aufstellen des Stützhebels (40) in diese Führungszapfenbahn (42) eintritt.

6. Fahrzeugdach nach einem der Ansprüche 3 bis 5,
**dadurch gekennzeichnet, dass** jeder Gleitzapfen (23), jeder Führungszapfen (41) und jeder Stützzapfen (43) mit Gleitflächen zum flächigen Abstützen in der jeweiligen Bahn (Kulissenbahn 24a bzw. Führungszapfenbahn 42) gebildet ist.

## Claims

1. Vehicle roof provided with at least one panel (12) that can be raised at its rear edge and displaced above the fixed vehicle roof (13) and with a control mechanism for the panel (12), which has a front lifting mechanism and a front displacement mechanism for the front edge (45) of the panel (12) and a rear lifting mechanism and a rear displacement mechanism for the rear edge (46) of the panel (12), the displacement mechanisms comprising control carriages (18, 19) which are connected to the panel (12), which are guided such that they can be displaced in lateral guide rails (17) and can be driven,
the lifting mechanism for the front edge (45) of the panel (12) being integrated into the front control carriage (18), and the front and the rear control carriages (18 and 19) on each side of the panel being spaced apart from each other, firmly connected to a drive cable (21) and able to be driven by the latter, and
sliding pins (25) fixed to the panel being provided on both sides of the panel front edge (45) in order, during the panel displacement, to guide the panel front edge (45) in guide tracks (26) fixed to the roof and belonging to the guide rails (17), and slotted guide tracks (28) running downward towards the front being provided in order to guide the panel front edge (45) during its raising and lowering movement,
**characterized in that**
each sliding pin (25) is formed with sliding surfaces to be supported flat in the guide track (26) and the slotted guide track (28).

2. Vehicle roof according to Claim 1, **characterized in that** the slotted guide tracks (28) are formed in slotted guides (27) firmly connected to the guide rails (17), and **in that** the upper end of the slotted guide tracks (28) open in front ends of longitudinal guide tracks (26) of the guide rails (17).

3. Vehicle roof according to Claim 2, **characterized in that** the front lifting mechanism has a sliding pin (23) which is guided in a slotted guide track (24a) of a slotted lifting guide (24) arranged on the front control carriage (18), the slotted guide track (24a) running in the opposite direction to the slotted guide track (28) fixed to the roof and belonging to the slotted guide (27) and rising in the direction of the panel front edge (45)

4. Vehicle roof according to one of Claims 1 to 3, provided with supporting levers (40) attached to the panel (12) on both sides of the panel rear edge (46) and guided by slotted guides, **characterized in that** a raising lever (31) is attached to the rear control carriage (19) such that it can pivot, during a rearward movement of the rear control carriage (19) is raised by a slotted lifting guide (36) fixed to the roof in order to raise the rear panel edge (46), and is then brought out of active engagement with the panel (12) and transfers the support of the panel rear edge (46) to the supporting lever (40).

5. Vehicle roof according to Claim 4, **characterized in that** the supporting lever (40) is attached to the panel (12) at one end, is permanently guided in a guide pin track (42) of the guide rail (17) by means of a guide pin (41) and, at the other end, has a further supporting pin (43), which enters this guide pin track (42) as the supporting lever (40) is raised

6. Vehicle roof according to one of Claims 3 to 5, **characterized in that** each sliding pin (23), each guide pin (41) and each supporting pin (43) is formed with sliding surfaces to be supported flat in the respective track (slotted guide track 24a and, respectively, guide pin track 42).

## Revendications

1. Toit de véhicule comportant au moins un panneau (12) pouvant être relevé sur son bord postérieur et pouvant coulisser au-dessus de la partie fixe (13) du pavillon, et un mécanisme de commande destiné audit panneau (12) et comprenant un mécanisme antérieur de levage et un mécanisme antérieur de coulissement affectés au bord antérieur (45) dudit panneau (12), ainsi qu'un mécanisme postérieur de levage et un mécanisme postérieur de coulissement affectés au bord postérieur (46) dudit panneau (12), les mécanismes de coulissement englobant des chariots de commande (18, 19) qui sont reliés audit panneau (12), peuvent être entrâmes et sont guides à coulissement dans des glissières latérales de guidage (17),
sachant que le mécanisme de levage dédié au bord antérieur (45) du panneau (12) est intégré dans le chariot antérieur de commande (18), les chariots de commande antérieur et postérieur (18, respectivement 19), mutuellement distants sur chaque côté du panneau, étant reliés rigidement à un câble d'entraînement (21) par lequel ils peuvent être menés, et sachant que des tenons coulissants (25) faisant corps avec le panneau sont prévus, de part et d'autre du bord antérieur (45) dudit panneau, pour guider ledit bord antérieur (45) du panneau lors du coulissement dudit panneau dans des pistes de guidage (26) des glissières de guidage (17), qui font corps avec le toit, des pistes de coulissement (28), déclinant vers l'avant, étant prévues pour guider le bord antérieur (45) du panneau au cours de ses mouvements de déploiement et d'abaissement,
**caractérisé par le fait**
**que** chaque tenon coulissant (25) est doté de surfaces de glissement pour conférer un appui, par contact à plat, dans la piste de guidage (26) et dans la piste de coulissement (28).

2. Toit de véhicule, selon la revendication 1,
**caractérisé par le fait que** les pistes de coulissement (28) sont façonnées dans des coulisses (27) reliées rigidement aux glissières de guidage (17) ; et **par le fait que** les extrémités supérieures desdites pistes de coulissement (28) débouchent dans des extrémités antérieures de pistes de guidage longitudinal (26) desdites glissières de guidage (17).

3. Toit de véhicule, selon la revendication 2,
**caractérisé par le fait que** le mécanisme antérieur de levage présente un tenon glissant (23) qui est guidé dans une piste de coulissement (24a) d'une coulisse de levage (24) située sur le chariot antérieur de commande (18), sachant que ladite piste de coulissement (24a) s'étend en sens inverse de la piste de coulissement (28) de la coulisse (27), faisant corps avec le toit, et monte en direction du bord antérieur (45) du panneau.

4. Toit de véhicule, selon l'une des revendications 1 à 3, comportant des leviers d'appui (40) guidés par des coulisses et articulés, sur le panneau, de part et d'autre du bord postérieur (46) dudit panneau,
**caractérisé par le fait qu'**un levier de déploiement (31), articulé à pivotement sur le chariot postérieur de commande (19), est soulevé par une coulisse de levage (36) faisant corps avec le toit, lors d'un mouvement rétrograde du chariot postérieur de commande (19), en vue de soulever le bord postérieur (46) dudit panneau ; et est ensuite mis hors prise d'avec le panneau (12), en procurant alors l'appui du bord postérieur (46) dudit panneau sur le levier d'appui (40).

5. Toit de véhicule, selon la revendication 4,
**caractérisé par le fait que** le levier d'appui (40) est articulé par une extrémité sur le panneau (12) ; est guidé durablement, au moyen d'un tenon de guidage (41), dans une piste (42) de la glissière de guidage (17) qui est assignée audit tenon de guidage ; et est muni, à l'autre extrémité, d'un tenon d'appui supplémentaire (43) pénétrant, lors du relevage dudit levier d'appui (40), dans cette piste (42) assignée audit tenon de guidage.

6. Toit de véhicule, selon l'une des revendications 3 à 5,
**caractérisé par le fait que** chaque tenon glissant (23), chaque tenon de guidage (41) et chaque tenon d'appui (43) sont dotés de surfaces de glissement en vue de l'appui, par contact à plat, dans la piste considérée (piste de coulissement 24a, respectivement piste 42 assignée au tenon de guidage).
